Europäisches Patentamt

(19) European Patent Office

Office européen des brevets

(11) Publication number: **0 195 843**
**B1**

(12) **EUROPEAN PATENT SPECIFICATION**

(45) Date of publication of patent specification: **17.10.90**

(21) Application number: **85109794.9**

(22) Date of filing: **05.08.85**

(51) Int. Cl.⁵: **B 29 D 30/54**

(54) **Apparatus for sealing a tyre retreading envelope.**

(30) Priority: **25.03.85 US 715631**

(43) Date of publication of application:
**01.10.86 Bulletin 86/40**

(45) Publication of the grant of the patent:
**17.10.90 Bulletin 90/42**

(84) Designated Contracting States:
**AT BE CH DE FR GB IT LI NL SE**

(56) References cited:
**FR-A-2 289 328**
**FR-A-2 377 879**
**US-A-4 274 897**
**US-A-4 299 647**
**US-A-4 309 234**

(73) Proprietor: **Oliver Rubber Company**
**1200 65th Street**
**Oakland California 94608 (US)**

(72) Inventor: **King, Michael John**
**4477 Barberry Court**
**Concorde California 94521 (US)**

(74) Representative: **Howden, Christopher Andrew**
**et al**
**FORRESTER & BOEHMERT Widenmayerstrasse**
**4/I**
**D-8000 München 22 (DE)**

Courier Press, Leamington Spa, England.

## Description

The invention relates to an apparatus for sealing a tyre retreading envelope against a tyre carcass, in the bead region of the tyre, for use in vulcanizing a pre-molded, precured tyre tread to a tyre carcass in a retreading operation according to the first part of claim 1. Such an apparatus is disclosed in US-A-4,274,897.

In tyre retreading utilizing premolded, precured tyre tread, a buffed tyre carcass, a layer of uncured rubber compound, and a premolded rubber tread are assembled and placed into a flexible envelope which encases all, or at least a substantial portion of the carcass and the precured tread. When in position, the interior of the envelope is substantially evacuated, and is also subjected to a positive external pressure to hold the tyre tread firmly in place while it is bonded to the tyre carcass. Such a procedure and apparatus for use therein, are shown, for example in US-A-3,779,830, which also discloses inflation of the tyre carcass during tread replacement.

Such a flexible envelope must be placed about the tyre in sealed relationship, which has been cumbersome, time-consuming and unreliable, according to prior art procedures and apparatus. Once encased in an envelope, the tyre carcass and preformed tread assembly is placed into a heated chamber or autoclave for vulcanization of the tread to the tyre carcass. One example of an apparatus for retreading a tyre and for sealing the envelope is shown in US-A-3,886,028.

One approach to the problem of sealing a tyre envelope to a tyre carcase to be retreaded is shown in US-A-4,274,897 which proposes to place, on each side of the tyre carcase, a respective sealing grid having annular rings thereon to contact the sides of the envelope, applied around the tyre carcase and tread, the two sealing grids being drawn towards one another, to apply pressure to respective sides of the tyre, by a plurality of springs extending between the sealing grids, through the central aperture of the tyre. Spacers, separate from the remainder of the apparatus, may be fitted between the beads of the tyre to maintain a predetermined spacing between the beads.

Another apparatus that provides an improved tyre envelope sealing system which has been found to be superior to that of US-A-4,274,897 is described in co-pending European Patent Application No. 84107635.9. Although the devices shown in the aforesaid disclosures all are effective to a degree in sealing a tyre envelope for a tyre being retreaded, they may become inefficient where a tyre with a worn or damaged bead region is encountered. In such a situation, it may be difficult properly to seal the envelope in the bead region, thereby jeopardizing the entire retreading procedure. US-A-4,309,234 discloses the use of a two piece curing rim the two pieces of which are inserted in the central aperture of the tyre carcase to be retreaded from opposite sides of the carcase and secured together by a bayonet-type connection. The two pieces of the curing ring have respective annular flange parts which extend on the outer sides of the tyre beads to engage the tyre envelope extended over the tread and carry annular rubber seals around their outer edges. In use, an inflatable inner tube, disposed within the tyre around the assembled curing rim, is inflated to force the tyre walls into sealing engagement with the seals around the flanges of the curing rim.

It is therefore an object of the present invention to solve the aforesaid problems and provide an improved apparatus for sealing a retreading envelope about a tyre during a retreading operation.

Accordingly, the invention provides apparatus for sealing a retreading envelope against a tyre carcase in the bead region of the tyre, for use in vulcanizing a premolded precured tyre tread to a tyre carcase in a tyre retreading operation, which apparatus comprises a pair of rigid ring members each adapted to fit against the exterior bead region of the tyre carcase and to hold the envelope interposed between the ring and the tyre carcase; a series of interconnecting springs mountable on said rings to connect the rings at circumferentially spaced apart locations; characterised in that at least some of said springs have spacers attached thereto for interposition between the bead portions of a tyre carcase to maintain a uniform distance between the bead portions of the tyre carcase, and in that each said rigid ring member has a right angular cross section defining an annular portion adapted to fit against an outer side area of a tyre bead region and a cylindrical portion adapted to fit against an inner edge surface of the tyre bead region.

The interconnecting springs are preferably attached each at one end to an annular portion of a first one of said ring members and are each releasably retained by post means on a second one of said ring members.

The springs act as retaining means and operate to draw the rings together. This presses at least one edge of each ring tightly against the tyre carcase bead, thereby causing the envelope to be pressed tightly and continuously against the outside of the bead and forming an annular seal. In a preferred embodiment, the springs are each secured at one end to a radially inner edge of one circular ring and each extends to a respective hook on the other ring. The outer edge of the annular portion of each ring is preferably provided with an elastomeric sealing member so that it can apply concentrated sealing pressure against the envelope without causing any damage to the envelope. Preferably, at least four springs spaced apart circumferentially are used, each in combination with a spacer block that keeps the tyre beads apart at the proper distance. Additional springs without spacer blocks may be utilized if desired.

Thus, a principal object of the invention is to provide an improved device for sealing a tyre envelope and particularly one used for retreading a tyre having worn or damaged beads that might otherwise be difficult to seal around the envelope.

Apparatus of the invention has been found to provide for the sealing of an envelope about a tyre during a retreading operation that is simple and easy to install, without the need for special tools, and yet is so highly effective that air and other gases are more dependably prevented from entering the envelope during curing.

In order that the invention may be more readily understood, and so that further features thereof may be appreciated, an embodiment of an apparatus of the invention will now be described, by way of example, with reference to the accompanying drawings, in which:

FIGURE 1 is a perspective view showing a premolded tread and carcass assembly for retreading a tyre encased in an envelope sealing apparatus embodying the present invention;

FIGURE 1A is a view in cross section of the premolded tyre tread assembly and sealing apparatus shown in Figure 1;

FIGURE 2 is an exploded perspective view of the envelope sealing apparatus shown in Figure 1;

FIGURE 3A is an enlarged view in section showing a sealing apparatus of the invention as it engages the beads of a tyre but before being secured in place;

FIGURE 3B is a view similar to Figure 3A, but showing the sealing apparatus secured in place;

FIGURE 4 is a view in elevation showing one ring member of the sealing apparatus of Figure 1; and

FIGURE 5 is a view in elevation showing a second member which is used in combination with the ring member of Figure 4, in the apparatus of Figure 1.

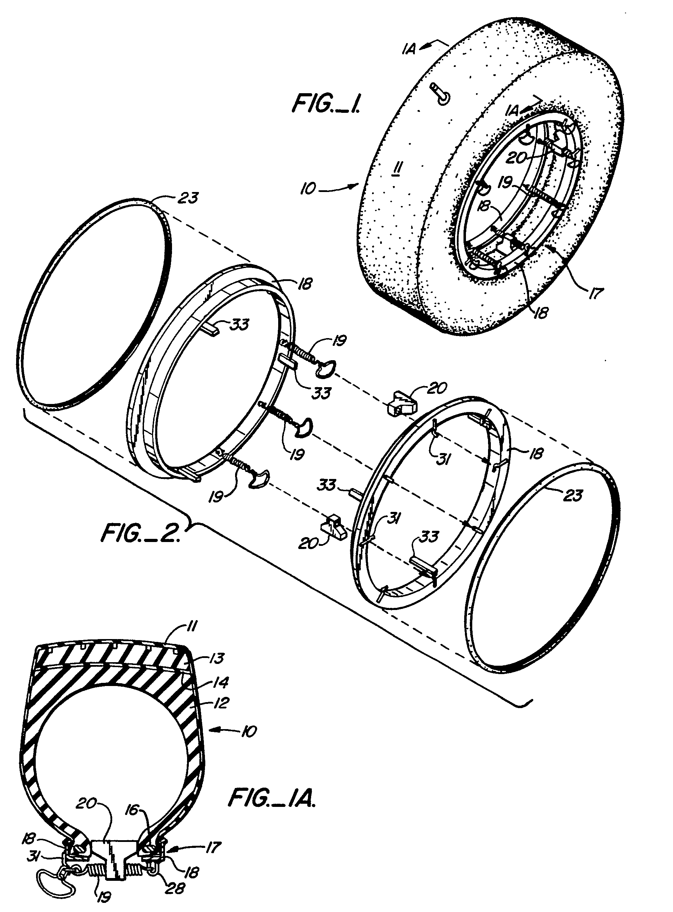

With reference to the drawing, Figures 1 and 2 show a tyre retreading assembly generally indicated 10 and comprising a retreading envelope 11, of conventional configuration, covering a tyre carcass 12 on which is positioned a premolded tread portion 13, to be secured to the carcass 12 by vulcanization of an uncured rubber compound 14 sandwiched between the carcass and the tread portion. The envelope 11 is pressed into sealing engagement against the bead portion 16 of the tyre carcass by a sealing apparatus 17 of the invention. The sealing apparatus 17 comprises a pair of rigid circular rings 18, preferably of metal, interconnected by a plurality of springs 19. The springs 19 are connectable at opposite ends to the two rings, are circumferentially spaced apart, and at least some of the springs extend through respective spacer blocks 20 that are adapted to fit between the tyre beads and act to hold the beads apart at a uniform distance during a retreading operation.

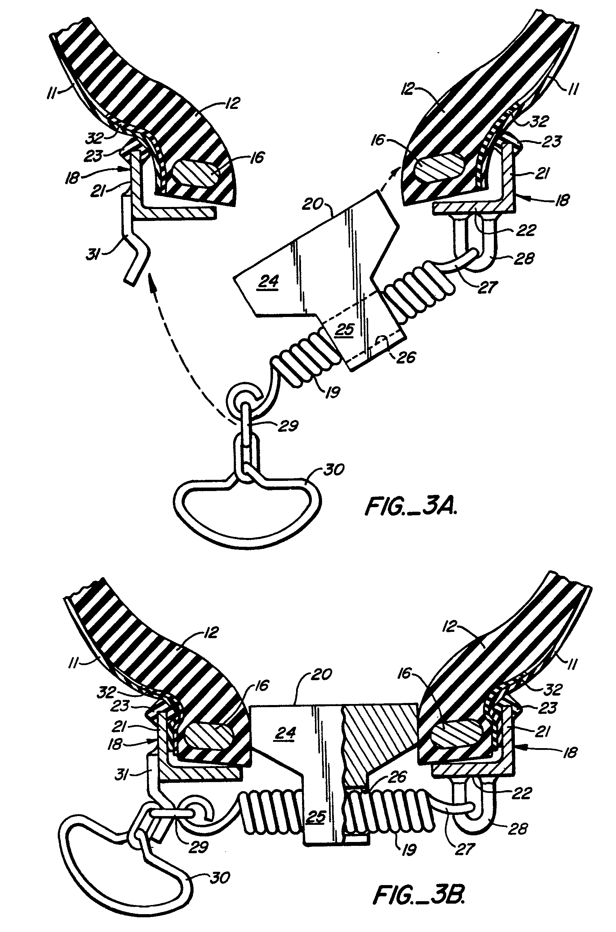

The rigid rings 18 are of the same diameter and have a generally right angular cross-section, defining an annular flange portion 21 which is integral with a cylindrical portion 22. The annular flange portion of each ring is wide enough to cover most of the side exterior area of the tyre bead, and the cylindrical portion extends inwardly by a distance sufficient to cover substantially the entire edge of the tyre bead on one side of the carcass. Thus, as shown in Figures 3A and 3B, the outer edge of each annular flange portion 21 contacts the tyre approximately in the area where its sidewall curves in to form the tyre bead. Attached to the outer edge of each annular flange portion 21 is a compression ring 23, formed of a relatively hard elastomeric material, to provide an enlarged cross section of this material. Preferably, the compression ring has a square or diamond shaped cross section so that, as shown in Figure 3B, when the springs 19 are connected to both circular rings 18 in order to draw each one firmly against the adjacent tyre bead during a retreading procedure, the compression rings 23 of both rings function to concentrate pressure against the envelope 11 on the tyre to produce a reliable seal.

The spacer blocks 20, are preferably utilized at at least four circumferentially spaced apart locations on the rings 18 where spring members are attached. Each block has a generally T-shaped configuration with a main body portion 24 having a length that is equal to the normal spacing of the beads on the tyre being retreaded. An integral base portion 25 projects from one side of the body portion 24 and has a transverse bore 26 for receiving a spring member 19. Thus, the spring member 19 also acts to maintain the spacer block 20 in its proper position.

The spring members 19 are tightly coiled and one end of each is permanently attached by an end loop 27 to a U-shaped fitting 28 fixed to the annular flange portion 21 of a first one of the rigid ring members. A small retainer ring 29 and a pull loop 30 is attached to the other end of each spring 19. When the rigid rings 18 are installed during a retreading operation, the retainer ring 29 is adapted to fit over and be held by a hook-like post 31 that is fixed to the annular flange portion of the second rigid ring member 18.

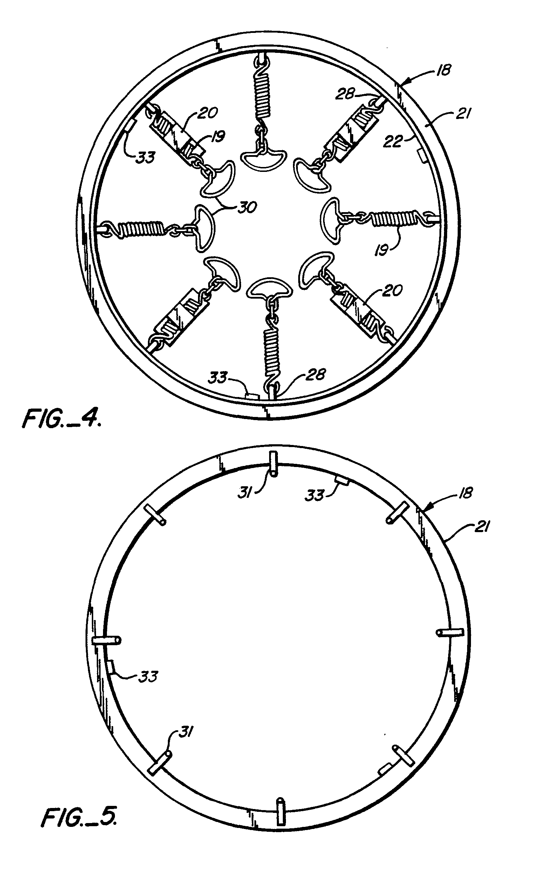

As shown in Figures 4 and 5, there are an equal number of springs attached to the first rigid ring member 18 as there are hook-like posts 31 on the second rigid ring member. Also, the U-shaped fittings provided for receiving the springs on the first ring member 18 are space apart by precisely the same distance as the hook-like posts 31 on the second rigid ring.

Each ring member 18 is preferably provided with circumferentially spaced-apart aligner tabs 33 that are fixed, e.g. by welding, to the inner surface of the cylindrical portion 22 of each ring member. These aligner tabs, as shown in Figure 2, extend beyond the edge of the ring member to cooperate with the other ring member when the device 17 is installed for a retreading operation.

In a typical retreading operation utilizing the apparatus of the invention, the tyre carcass 12 to be retreaded is first prepared in a well known manner which may comprise buffing the tyre tread surface. Next, a thin layer of uncured bonding rubber 14 is placed onto the buffed and prepared tyre surface and a precured and premolded rubber tread portion 13 is placed over the layer of bonding material and around the tyre.

Usually, the ends of the rubber tread portion are stapled together to retain them in position. Subsequently, an envelope 11 of elastomeric material is placed over the tyre and tread portion assembly to cover completely the tyre tread area, sidewalls and at least down to the inner edges of both bead areas. The envelope 11 may even extend around each bead portion and partially inside the tyre, if desired.

An additional annular gasket 32 having approximately the same thickness as the envelope is preferably utilized under the envelope on each side of the tyre, as shown in Figure 3B.

With the envelope and the gaskets 32 in place, the rigid rings 18 can be quickly positioned on opposite sides of the tyre and tread assembly, as shown in Figures 3A and 3B, alignment of the rings being facilitated by the aligner tabs 33. With both rings in place, as shown in Figure 3A, the end loop of each spring can be grasped manually and pulled into position with its retainer ring engaged on a corresponding post 31, as shown in Figure 3B. If there is a spacer block 20 mounted on the spring 19, engagement of the spring over a post 31 positions the block 20 between the tyre beads. Once all of the springs 19 have been connected between the two rigid rings, the edge compression rings 23 on both sides of the tyre can act to apply concentrated pressure against the envelope in the annular recessed area adjacent each tyre bead portion. The result is a reliable seal for the envelope on the tyre that lasts throughout the entire retreading process. Once the springs are in place and tightened to seal the envelope, the entire assembly is placed in a module or autoclave where heat and pressure can be applied to vulcanize the thin layer of bonding rubber and thereby adhere the cured retread rubber to the tyre carcass. After the heating step, the rigid rings 18 can be quickly removed along with the envelope.

## Claims

1. Apparatus for sealing a retreading envelope (11) against a tyre carcase (12) in the bead region of the tyre, for use in vulcanizing a premolded precured tyre tread (13) to a tyre carcase (12) in a tyre retreading operation, which apparatus comprises a pair of rigid ring members (18) each adapted to fit against the exterior bead region of the tyre carcase and to hold the envelope (11) interposed between the ring (18) and the tyre carcase (12); a series of interconnecting springs (19) mountable on said rings (18) to connect the rings at circumferentially spaced apart locations; characterised in that at least some of said springs have spacers (20) attached thereto for interposition between the bead portions of a tyre carcase to maintain a uniform distance between the bead portions of the tyre carcase, and in that each said rigid ring member (18) has a right angular cross section defining an annular portion (21) adapted to fit against an outer side area of a tyre bead region and a cylindrical portion (22) adapted to fit against an inner edge surface of the tyre bead region.

2. Apparatus according to claim 1, wherein said interconnecting springs (19) are attached at one end to an annular portion (21) of a first one of said ring members (18) and are releasably retained by post means (31) on a second one of said ring members (18).

3. Apparatus according to claim 1 or claim 2, wherein each spacer (20) has a body portion (24) with a length equal to the desired distance between tyre bead portions during a retreading operation, and a base portion (25) extending from said body portion having a bore (26) through which a said spring (19) can extend.

4. Apparatus according to any one of claims 1 to 3, further comprising a pair of annular gasket member (32) each having an inside and outside diameter sufficient to enable the gasket to cover the outside surface of the tyre bead region on one side of the tyre under a said ring member.

5. Apparatus according to claim 4, wherein said gasket members (32) are formed from a sheet elastomeric material.

6. Apparatus according to any one of claims 1 to 5, further comprising means (23) on each of said ring members (18) for providing a concentrated pressure on the envelope (11) at the tyre bead area to assure a fluid tight circumferential seal of the envelope around both bead portions of the tyre casing.

7. Apparatus according to claim 6, wherein said means (23) on each ring member for providing concentrated pressure on the envelope comprises a compression ring of elastomeric material attached to the outer edge of said annular portion (21) of each said ring member.

## Patentansprüche

1. Vorrichtung zum Dichten eines Mantels (11) gegen eine Reifenkarkasse (12) im Wulstbereich des Reifens beim Runderneuern, zur Verwendung beim Vulkanisieren einer vorgeformten, vorgehärteten Lauffläche (13) an eine Reifenkarkasse (12) bei der Reifenrunderneuerung, wobei die Vorrichtung ein Paar fester Ringelemente (18), jedes so ausgelegt, daß es gegen den äußeren Wulstbereich der Reifenkarkasse paßt und den zwischen dem Ring (18) und der Reifenkarkasse (12) gelegten Mantel (11) hält; eine Anzahl zusammengeschalteter Federn (19), die auf den Ringen (18) zum Verbinden der Ringe an am Umfang voneinander entfernten Stellen angebracht sind; aufweist, dadurch gekennzeichnet, daß wenigstens einige der Federn daran angebrachte Abstandshalter (20) zum Zwischenlegen zwischen die Wulstbereiche einer Reifenkarkasse haben, um einen gleichförmigen Abstand zwischen den Wulstbereichen der Reifenkarkasse aufrecht zu erhalten, und daß jedes der festen Ringelemente (18) einen rechtwinkligen Querschnitt, der einen ringförmigen Abschnitt (21) definiert, welcher so ausgelegt ist, daß er gegen eine Außenseitenfläche eines Reifenwulstbereiches paßt, und einen zylindrischen Abschnitt (22) aufweist, der ausgelegt ist, daß er gegen eine Innenkantenfläche des Reifenwulstbereiches paßt.

2. Vorrichtung nach Anspruch 1, wobei die zusammengeschalteten Federn (19) mit einem Ende an einen ringförmigen Abschnitt (21) eines ersten der Ringelemente (18) befestigt sind und entfernbar von Anschlageinrichtungen (31) auf einem zweiten der Ringelemente (18) gehalten sind.

3. Vorrichtung nach Anspruch 1 oder Anspruch 2, wobei jeder Abstandshalter (20) einen Körperabschnitt (24) mit einer Länge, die gleich dem gewünschten Abstand zwischen den Reifenwulstbereichen während einer Runderneuerung ist, und einem Grundabschnitt (25), der sich vom Körperabschnitt erstreckt und eine Bohrung (26) hat, durch die sich eine der Federn (90) erstrecken kann, aufweist.

4. Vorrichtung nach einem der Ansprüche 1 bis 3, die weiterhin ein Paar ringförmiger Dichtelemente (32) aufweist, wobei jede einen inneren und einen äußeren Durchmesser hat, der ausreichend ist, daß die Dichtung die Außenfläche des Reifenwulstbereiches auf einer Seite des Reifens unter einem der Ringelemente bedeckt.

5. Vorrichtung nach Anspruch 4, wobei die Dichtelemente (32) aus einem Stück elastomeren Materials hergestellt sind.

6. Vorrichtung nach einem der Ansprüche 1 bis 5, die weiterhin Einrichtungen (23) auf jeder Seite der Ringelemente (18) aufweist, um einen konzentrierten Druck auf den Mantel (11) an der Reifenwulstfläche vorzusehen, damit eine fluiddichte umfangsmäßige Dichtung des Mantels um beide Wulstbereiche des Reifengehäuses sichergestellt ist.

7. Vorrichtung nach Anspruch 6, wobei die Einrichtung (23) auf jedem Ringelement zum Herstellen konzentrierten Druckes auf den Mantel einen Druckring aus elastomerem Material aufweist, der an der Außenkante des ringförmigen Abschnittes (21) jedes Ringelementes befestigt ist.

**Revendications**

1. Dispositif pour le montage étanche d'une enveloppe de rechapage (11) contre la carcasse (12) d'un pneumatique dans la région des talons du pneu, à utiliser lors de la vulcanisation d'une bande de roulement (13) de pneu prémoulée et prévulcanisée sur une carcasse (12) de pneu dans une opération de rechapage de pneu, lequel dispositif comprend une paire d'éléments formant couronnes rigides (18) conçues chacune pour s'ajuster contre la région extérieure des talons de la carcasse du pneu et pour maintenir l'enveloppe (11) intercalée entre la couronne (18) et la carcasse (12) du pneu; une série de ressorts de liaison (19) pouvant être montés sur lesdites couronnes (18) pour relier les couronnes en des emplacements espacés circonférentiellement les uns des autres; caractérisé en ce qu'au moins certains desdits ressorts ont des pièces d'écartement (20) fixées à ceux-ci pour être intercalées entre les parties formant talons de la carcasse du pneu afin de maintenir une distance uniforme entre les parties formant talons de la carcasse du pneu, et en ce que chacun desdits éléments formant couronnes rigides (18) a une section transversale angulaire droite définissant une partie annulaire conçue pour s'ajuster contre une zone latérale extérieure d'une région formant talon du pneu, et une partie cylindrique (22) conçue pour s'ajuster contre une surface formant bord interne de la région formant talon du pneu.

2. Dispositif selon la revendication 1, dans lequel lesdits ressorts de liaison (19) sont fixés, au niveau d'une première extrémité, à une partie annulaire (21) d'un premier desdits éléments formant couronnes (18) et sont retenus d'une manière libérable par des moyens formant doigts (31) présents sur un second desdits éléments formant couronnes (18).

3. Dispositif selon la revendication 1 ou la revendication 2, dans lequel chaque pièce d'écartement (20) a une partie formant corps (24) d'une longueur égale à la distance voulue entre les parties formant talons du pneu pendant une opération de rechapage, et une partie formant base (25) s'étendant depuis ladite partie formant corps ayant un alésage (26) à travers lequel peut s'étendre un desdits ressorts (19).

4. Dispositif selon l'une quelconque des revendications 1 à 3, comprenant en outre une paire de joints annulaires (32) ayant chacun un diamètre intérieur et un diamètre extérieur suffisants pour permettre au joint de couvrir la surface extérieure de la région des talons du pneu sur un premier côté du pneu situé sous un desdits ressorts.

5. Dispositif selon la revendication 4, dans lequel lesdits joints (32) sont en matière élastomère en feuille.

6. Dispositif selon l'une quelconque des revendications 1 à 5, comprenant en outre un moyen (23) sur chacun desdits éléments formant couronnes (18) pour appliquer une pression concentrée sur l'enveloppe (11) au niveau de la zone des talons du pneu, afin d'assurer une étanchéité circonférentielle aux fluides de l'enveloppe autour des deux parties formant talons de la carcasse du pneu.

7. Dispositif selon la revendication 6, dans lequel ledit moyen (23) présent sur chaque élément formant couronne pour appliquer une pression concentrée sur l'enveloppe comprend un anneau de compression en matière élastomère, fixé au bord extérieur de ladite partie annulaire (21) de chacun desdits éléments formant couronnes.

FIG._1.

1A

1A

11

10

20

19

18

18

17

18

FIG._2.

23

18

33

19

33

19

19

33

20

20

31

18

33

31

33

23

11

13

14

12

10

20

16

18

17

31

18

19

28

FIG._1A.

1

EP 0 195 843 B1

FIG._3A.

FIG._3B.

2

FIG._4.

FIG._5.